Europäisches Patentamt

European Patent Office

Office européen des brevets

(19)

(11) Veröffentlichungsnummer: **0 335 150**

**A2**

## (12) EUROPÄISCHE PATENTANMELDUNG

(21) Anmeldenummer: **89104244.2**

(22) Anmeldetag: **10.03.89**

(51) Int. Cl.⁴: **B60P 3/32**

(30) Priorität: 30.03.88 DE 8804315 U

(43) Veröffentlichungstag der Anmeldung:
04.10.89 Patentblatt 89/40

(84) Benannte Vertragsstaaten:
AT BE CH DE FR IT LI LU NL

(71) Anmelder: **Bischoff, Rainer**
**In den Gassen 26**
**D-5407 Boppard 4(DE)**

(72) Erfinder: **Bischoff, Rainer**
**In den Gassen 26**
**D-5407 Boppard 4(DE)**

(74) Vertreter: **Hentschel, Peter, Dipl.-Ing.**
**Hohenzollernstrasse 21**
**D-5400 Koblenz(DE)**

(54) Eckverbinder für Sandwichplatten von Wohnwagenaufbauten.

(57) Eckverbinder für Sandwichplatten zur Erstellung von Wohnwagenaufbauten, bestehend aus Profil-Schenkel und -Stegen aus Leichtmetall oder GFK (Glasfaserkunststoff) wobei Außen- und Innenschenkel (5 bzw. 8) dicht und unverlierbar fest mit dem Rand der Außen- bzw. Innenseite von zwei rechtwinklig aneinander grenzenden Sandwichplatten (2) verbunden sind und ein Rundsteg (6) viertelkreisförmig von einem Außenschenkel (5) zum anderen verläuft, und bei dem die Außenschenkel (5) mit dem Rundsteg (6) einerseits und die Innenschenkel (8) andererseits als ein selbständiges Außen- bzw. ein selbständiges Innenprofil (3, 4) ausgebildet sind, daß die Ecke zwischen den Innenschenkeln (8) durch einen 45° zu beiden Innenschenkeln (8) verlaufenden Brückensteg (9) ersetzt ist, daß auf der Länge des Brückensteges (9) in gleichen Abständen Widerlager für Verbindungsglieder (16) verteilt sind, und daß die Verbindungsglieder form- und kraftschlüssig mit einem aus zwei abstandsparallelen, symmetrisch zur Eckwinkel-Halbierenden (11) in Richtung Innenprofil (4) verlaufenden Federstegen (10) bestehenden Diagonalsteg verbindbar sind.

FIG 1

## Eckverbinder für Sandwichplatten von Wohnwagenaufbauten

Die Erfindung betrifft einen Eckverbinder von Wohnwagenaufbauten, bestehend aus Profil-Schenkel und -Stegen aus Leichtmetall oder GFK (Glasfaserkunststoff) wobei Außen- und Innenschenkel dicht und unverlierbar fest mit dem Rand der Außenbzw. Innenseite von zwei rechtwinklig aneinander grenzenden Sandwichplatten verbunden sind und ein Rundsteg viertelkreisförmig von einem Außenschenkel zum anderen verläuft, und einen eckwinkelhalbierenden Diagonalsteg zur Ecke der Innenschenkel aufweist.

Ein Eckverbinder der eingangs genannten Art hat sich im Bereich des Wohnwagenbaues hervorragend bewährt, weil er es gestattet einerseits die Sandwichplatten optimal tragend in die Lastaufnahme, die sich aus den diversen Betriebsbedingungen von Wohnwagen oder Wohnwagenaufbauten ergibt, einzubeziehen und damit deren Tragfähigkeit zu nutzen und andererseits selbst die Voraussetzungen für eine hohe Tragfestigkeit bietet sowie in der Lage ist, punktförmige Lasten aufzunehmen und zu verteilen und zugleich die dauerhaft dichte Verbindung der Sandwichplatten zu verwirklichen. Der Wohnwagenaufbau nach der DE-PS 31 15 452, in der dieser Eckverbinder offenbart ist, hat bei geringem Gewicht eine unerwartet hohe Stabilität.

Bei der Herstellung eines Wohnwagenaufbaues, d.h. also beim Montieren von Eckverbindern und Sandwichplatten, müssen jedoch gewisse Erschwernisse in Kauf genommen werden. Bei den bekannten Eckverbindern ist nämlich jeweils aus einem Außenschenkel und einem Innenschenkel eine Zange gebildet, und der lichte Abstand zwischen den beiden Schenkeln ist etwas kleiner, als die Dicke der Sandwichplatten. Darüber hinaus tragen die Innen und Außenschenkel an der Seite, mit denen sie mit der Sandwichplattenoberfläche in Berührung treten eine sägezahnförmige Profilierung. Die Profilierung ist darüber hinaus so gestaltet, daß die gebildete Zange zwar auf den Rand der Sandwichplatte aufgeschoben aber nicht mehr zurückgezogen werden kann.

Aufgrund der vorgenannten Ausgestaltung des bekannten Eckverbinders muß dieser auf die Ränder der Sandwichplatten mit Kraftaufwand aufgeschoben werden, denn die aus Innen- und Außenschenkel gebildete Zange muß aufgespreizt werden. Wenn eine Sandwichplatte eine besonders lange Kante hat, ist die Eckverbindung entsprechend lang und damit wird auch die aufzubringende Kraft entsprechend groß. Schwieriger gestaltet sich die Arbeit, wenn der Eckverbinder an einem Paar Schenkeln bereits mit einer Sandwichplatte verbunden ist und anschließend mit einer zweiten, dazu rechtwinklig verlaufenden zusammengefügt werden muß. Auch wenn Sandwichplatten an sich Leichtbauelemente sind, wird es doch problematisch, nunmehr eine solche Platte mit dem Eckverbinder zu vereinen. In diesem Fall erweisen sich die Abmessungen der Sandwichplattenelemente als Erschwernis beim Einfädeln oder Einpassen in die aus Innen- und Außenschenkeln gebildete Gabel. Das Arbeiten wird um so umständlicher, je weiter fortgeschritten der Aufbau bzw. die Montage des Wohnwagenaufbaues bereits ist.

Es ist verständlich, daß bei der geschilderten Bauweise verhältnismäßig enge Toleranzen eingehalten werden müssen. Ein Beispiel mag dies verdeutlichen:

Wird die aus Innen- und Außenschenkel des bekannten Eckverbinders gebildete Gabel an der untersten zulässigen Grenze der Toleranz bemessen, d.h. ist die lichte Weite zwischen den beiden Gabeln besonders klein und ist der Sandwichplattenrand zufälligerweise in der Dicke im Bereich der größten zulässigen Maßabweichung nach oben, dann kann es unter Umständen unmöglich werden, beide zusammenzufügen; zumindest wird aber diese Arbeit extrem erschwert. Der entgegengesetzte Fall, daß die lichte Weite zwischen der Gabel, die von den beiden Schenkeln des Eckverbinders gebildet wird, an der oberen Toleranzgrenze liegt, während die Dicke der Sandwichplatten am Plattenrand zufällig an der unteren Toleranzgrenze liegt, kann zur Folge haben, daß entweder die Kraftübertragung zwischen der Sandwichplatte und dem Eckverbinder oder aber die Abdichtung ungenügend sind, bzw. gegebenenfalls Nacharbeiten erfordern.

Es läßt sich zusammenfassend zwar feststellen, daß der bekannte Eckverbinder zwar die Möglichkeit bietet, Wohnwagenaufbauten von überraschend hoher Festigkeit zu schaffen, daß die Montage des Wohnwagenaufbaues jedoch unter Umständen umständlich und zeitraubend sein kann und daß sowohl an die Dimensionierung der Sandwichplatten wie auch an die Abmessungen der Eckverbinder relativ enge Forderungen bezüglich Maßhaltigkeit gelegt werden müssen. Die umständliche Montage kostet Zeit und damit Geld. Sandwichplatten und Eckverbinder sind ebenfalls um so teurer, je enger die Maßtoleranzen sind.

Der Erfindung liegt die Aufgabe zugrunde, diese Schwierigkeiten zu vermeiden und einen Eckverbinder der eingangs genannten Art so auszugestalten, daß die Montage eines Wohnwagenaufbaues wesentlich erleichtert wird und zugleich auf die Einhaltung besonders enger Maßtolzeranzen der Sandwichplatte und des Eckverbinders verzichtet werden kann, ohne daß Festigkeit und Abdichtung beeinträchtigt werden.

Zur Lösung dieser Aufgabe kennzeichnet sich der einleitend genannte Eckverbinder erfindungsgemäß dadurch, daß die Außenschenkel mit dem Rundsteg einerseits und die Innenschenkel andererseits als ein selbständiges Außen- bzw. ein selbständiges Innenprofil ausgebildet sind, daß die Ecke zwischen den Innenschenkeln durch einen 45° zu beiden Innenschenkeln verlaufenden Brückensteg ersetzt ist, daß auf der Länge des Brückensteges in gleichen Abständen Widerlager für Verbindungsglieder verteilt sind, und daß die Verbindungsglieder form- und kraftschlüssig mit dem Diagonalsteg verbindbar sind.

Dadurch, daß der Eckverbinder erfindungsgemäß in ein Innen- und in ein Außenprofil geteilt ist, entfällt die Notwendigkeit, den Rand der Sandwichplatte in eine Zange, deren lichte Weite Untermaß hat unter Kraft einzuschieben. Ein besonders schwieriges Problem bei der bisherigen Montage ist damit vermieden. Dadurch, daß der erfindungsgemäß ausgebildete Eckverbinder bspw. zunächst mit dem Innenprofil gegen zwei Sandwichplattenränder gesetzt oder montiert wird und anschließend das Außenprofil aufgesetzt und zuletzt durch die Verbindungsglieder, die in den Diagonalsteg eingreifen, ein Form- und Kraftschluß hergestellt wird, gelingt es immer und an jeder Stelle, dafür zu sorgen, daß der Innenschenkel und der zugehörige, gegenüber stehende Außenschenkel den Sandwichplattenrand mit der nötigen Auf- oder Anpreßkraft umschließen, und zwar unabhängig von irgendwelchen Maßtoleranzen. Somit wird einerseits die nötige hohe Festigkeit, andererseits die zuverlässige Abdichtung gewährleistet.

Der Schaffung des erfindungsgemäß ausgebildeten Eckverbinder stand ursprünglich die Befürchtung entgegen, der Eckverbinder könne an Festigkeit verlieren, wenn der Diagonalsteg nicht einstückig vom Rundsteg nach innen zur Innenecke durchgeht. Versuche und andere Prüfungen haben jedoch ergeben, daß der Rundsteg entsprechend dimensioniert die erforderliche Festigkeit des Eckverbinders gewährleistet, und daß andererseits durch die Verbindungsglieder, die zwischen dem Brückensteg des Innenprofils und dem Diagonalsteg verlaufen, eine hinreichend große Kraftübertragung erfolgt, die eine derartig hohe Stabilität gewährleistet, die dem bekannten Eckverbinder nicht nur ebenbürtig, sondern teilweise sogar überlegen ist, weil der Sandwichplattenrand durch die in Abständen angeordneten Verbindungsglieder über die gesamte Länge des Eckverbinders hin stets volltragend in die Verbindung einbezogen ist.

Bei der Weiterbildung nach Anspruch 2 ist der Diagonalsteg aus zwei abstandsparallelen, symmetrisch zur Eckwinkel-Halbierenden, in Richtung Innenprofil verlaufenden, am Ende mit gegeneinander gerichteten Widerhaken versehenen Federstegen besetzt.

Diese Weiterbildung vereinfacht im besonderen Maße die Montage, denn es lassen sich Haltestücke unter Auslenkung der Federstege hinter die Widerhaken einschieben.

Vorteilhaft ist es, wenn die Widerlager als konische Löcher für Verbindungsglieder in Form von Senkkopfschrauben ausgebildet sind, und daß zwischen den Widerhaken der Federstege Klötze oder Leisten verdreh- und zugsicher eingerastet sind, die Muttergewinde für die Senkkopfschrauben aufweisen.

Dadurch, daß die Verbindungsglieder Senkkopfschrauben sind, und daß zwischen die Widerhaken der Federstege Klötze oder Leisten, d.h. Stücke mit Muttergewinde aufgenommen sind, läßt sich in geringen Abständen eine Verspannung von Innen- und Außenprofil herbeiführen.

Die Weiterbildung nach Anspruch 4 sieht vor, daß die Innen- und die Außenstege zur Sandwichplattenoberfläche offene, flach rechteckförmige Ausnehmungen aufweisen, und daß in den Ausnehmungen mit den Sandwichplattenoberflächen dichtende Klebebänder und/oder an den Sandwichplattenoberflächen haftender hoch tragfähiger, pastöser Kleber von wenigstens 400 kg/cm² Tragfähigkeit aufgenommen ist.

Mit dieser Weiterbildung wird die Montage noch wesentlich vereinfacht. Es gibt bekanntlich hoch tragfähige Kleber pastöser Konsistenz, die so eingestellt werden, daß sie langsam aushärten und darüber hinaus extrem abdichtend sind. So können bei der Montage eines Wohnwagenaufbaues nach Einbringen von Klebebändern oder den hoch tragfähigen, pastösen Klebern durch Einstellung entsprechend langer Abbindezeiten der hoch tragfähigen Kleber zunächst relativ lose Eckverbindungen hergestellt werden, bis der gesamte Aufbau arrangiert ist. Anschließend werden die Senkkopfschrauben angezogen, der Kleber in den Ausnehmungen wird komprimiert und fest gegen die Sandwichplattenoberflächen gepreßt und kann langsam abbinden, bzw. aushärten. Die Montage ist dadurch ohne Eile durchführbar und führt dennoch zu hochtragfähigen Verbindungen, die den Vorteil zuverlässiger Dichtheit haben.

Gemäß Anspruch 5 ist vorgesehen, daß daß am Außenprofil zwischen den Außenschenkeln und dem Rundsteg, am Innenprofil zwischen den Innenschenkeln und dem Brückensteg in Richtung Sandwichplatte vorspringende Anschlagleisten als Widerlager für die Stirnkanten der Sandwichplatten angeformt sind.

Diese Anschlagleisten am Innenprofil und Außenprofil erleichtern die Montage, denn sie geben beiden Profilen eine Vorfixierung.

Eine weitere Erleichterung der Montage ist bei der Weiterbildung nach Anspruch 6 dadurch erreicht, daß die Innenschenkel der Innenprofile mit der Sandwichplatte zusätzlich zur Klebverbindung vernietet sind.

Es ist auf diese Weise möglich, während der Montage zunächst die Innenprofile anzufügen, mittels üblicher Hohlnieten zu fixieren und erst danach die Außenprofile gegenzusetzen.

Die Ansprüche 7, 8, 9 und 10 betreffen Weiterbildungen, die bei einem bekannten Eckverbinder der eingangs genannten Art überhaupt nicht erzielbar waren und die zu sehr erheblichen Vorteilen führen.

Durch die Trennung des Eckverbinders in ein Innen- und ein Außenprofil läßt sich nämlich das verwendete Material, d.h. der Werkstoff, in weitem Umfang variieren. Werden bspw. Innen- und Außenprofil als Strangpreßprofile aus Aluminium gefertigt, wodurch sie besonders preiswert sind, dann können die Senkkopfschrauben und ggfl. auch die Klötze oder Gewindemuttern aus Kunststoff bestehen, und man hat hohe Festigkeit ohne zugleich eine Wärme- oder Kältebrücke in Kauf nehmen zu müssen, denn die Senkkopfschrauben aus Kunststoff wirken gegenüber Metall als wärmeisolierende Elemente. Hinzu kommt aber auch noch, das temperaturbedingte Ausdehnungen und Schrumpfungen metallischer Bauteile durch Kunststoff entsprechender Beschaffenheit kompensiert werden können. Erfindungsgemäß ist es somit nunmehr möglich, z.B. das Außenprofil alternativ z.B aus Glasfaserkunststoff zu fertigen und das Innenprofil aus Leichtmetall. Es können beide, das Innen- und das Außenprofil aus Glasfaserkunststoff bestehen. Das Innenprofil muß insbesondere, wenn es entsprechend große Querschnitte hat, nicht einmal unbedingt aus Glasfaserkunststoff gefertigt werden, sondern kann aus anderen hochfesten Kunststoffen bestehen. Es ist also jede denkbare Werkstoffwahl und Kombination zwischen Kunststoff und Metall möglich. Die Senkkopfschrauben können je nach Wunsch aus Metall oder Kunststoff bestehen. Um eine Kältebrücke zu unterbrechen, muß aber nicht einmal eine Kunststoffschraube verwendet werden. Es genügt bspw., wenn das Muttergewinde in einem Klotz oder in einer Leiste aus Kunststoff aufgenommen ist.

Durch die Erfindung wird somit die Möglichkeit gegeben, Wohnwagenaufbauten auch extrem temperaturstabil auszubilden bzw. durch geeignete Werkstoffwahl besonderen Einsatzbedingungen optimal anzupassen.

Gemäß Anspruch 11 sind in den Hohlräumen zwischen Innen- und Außenprofil sowie Sandwichplattenstirnflächen Versorgungsstränge sowie schall- und wärmeisolierender und dichtender Schaum aufgenommen.

Ein besonderer Vorteil des Eckverbinders der eingangs genannten Art nach der DE-PS 31 15 452 ist die Ring-Käfigankerbildung, welche dem Wohnwagenaufbau die überraschend hohe Festigkeit verleiht. Diese Maßnahme ist auch bei dem erfindungsgemäß ausgebildeten Eckverbinder durchführbar, indem nach Anspruch 12 alle Außenschenkel der Außenprofile eines Wohnwagenaufbaues an Gehrungs- und an Eckstößen zu einem räumlichen, alle Sandwichplatten von außen umschließenden, Ringanker-Käfig verbunden sind.

Bei der Weiterbildung nach Anspruch 12 genügt es, wenn alle sich in Ecken stoßenden Außenprofile miteinander verbunden sind, weil sie dann alle Sandwichplatten des Wohnwagenaufbaues nach Art des Ringanker-Käfigs von außen umfassen und zusammenpressen. Die von innen mittels der Senkschrauben gegengespannten Innenprofile sorgen dafür, daß längs aller Kanten, Winkel und Ecken des Ringanker-Käfigs entsprechende Einspannkräfte auf die Sandwichplatten übergehen, so daß sich der Wohnwagenaufbau festigkeitstechnisch nach seiner Montage wie ein einstückiger Hohlkörper verhält.

Die Verbindung der Außenprofile kann gem. Anspruch 13, je nach Wahl des Werkstoffes, durch Schmelzschweißung erfolgen, wenn die Außenprofile aus Leichtmetall bestehen oder sie kann mittels Kunststoff-Kaltschweißung vorgenommen werden, wenn die Außenprofile aus Glasfaserkunststoff gefertigt sind.

Es ist alternativ oder zusätzlich zu Anspruch 13 aber auch möglich, die Stöße der Außenprofile zu verstärken, indem gem. Anspruch 14 so weitergebildet wird, daß die Außenschenkel an den Gehrungs- und Eckstößen mittels stoßüberlappender Winkel- und Eckmuffen miteinander vernietet sind.

Durch Laschen, Muffen, Formteile oder dergl., die geklebt, geschweißt oder vernietet sind, läßt sich somit unter allen Umständen der gewünschte Ein-Körper-Effekt des Wohnwagenaufbaues mit Hilfe des erfindungsgemäß ausgebildeten Eckverbinders herbeiführen.

Ein Ausführungsbeispiel des erfindungsgemäß ausgebildeten Eckverbinders ist in den Zeichnungen dargestellt. Es zeigen:

Fig. 1 - eine Schnittansicht des erfindungsgemäß ausgebildeten Eckverbinders mit anschließenden Sandwichplattenrändern,

Fig. 2 - eine perspektivische Teil-Schemaansicht des durch Weglassen der Sandwichplatten aus den Eckverbindern gem. Fig. 1 gebildeten Ring-Käfigankers eines Wohnwagenaufbaues.

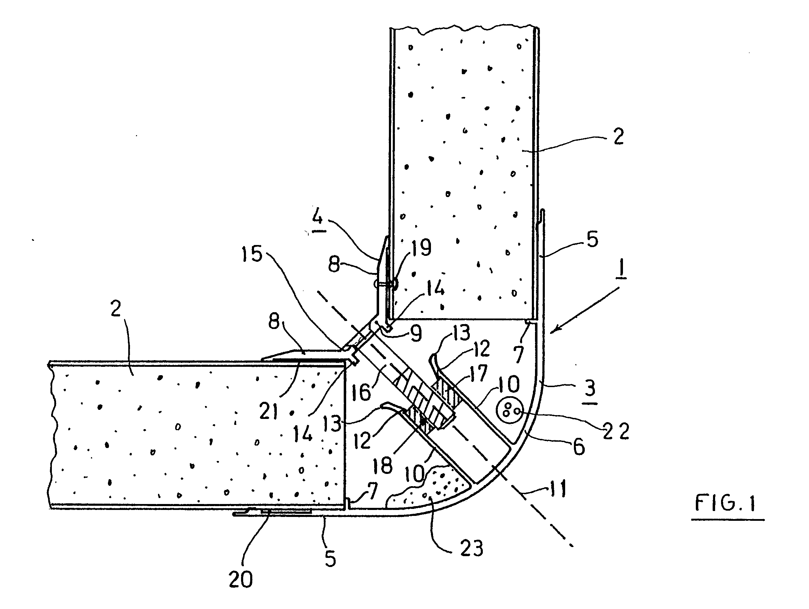

Die Fig. 1 zeigt einen Eckverbinder 1, der zwei rechtwinklig aneinandergrenzende Sandwichplatten 2 miteinander verbindet.

Der Eckverbinder 1 besteht aus einem Außenprofil 3 und einem Innenprofil 4. Am Außenprofil sind zwei rechtwinklig zueinander verlaufende Außenschenkel 5 vorhanden, die durch einen viertelkreisförmigen Rundsteg 6 verbunden sind, wobei die Innenenden der Außenschenkel 5 durch angeformte Anschlagleisten 7 definiert sind.

Das Innenprofil 4 weist zwei rechtwinklig zueinander verlaufende Innenschenkel 8 auf, die an der Ecke durch einen Brückensteg 9 verbunden sind, der winklig im Winkel von 45° zu beiden Innenschenkeln 8 verläuft. Der Brückensteg 9 überbrückt die Ecke zwischen den beiden Innenschenkeln 8.

Im Bereich der Mitte des Rundsteges 6 sind zwei Federstege 10 angeformt, welche symmetrisch zur Eckwinkel-Halbierenden 11 in einem Abstand in Richtung Innenprofil 4 verlaufen. Die Federstege 10 haben am Ende gegeneinandergerichtete Widerhaken 12, von denen aus bogenförmig nach außen gekrümmte Enden 13 angeformt sind.

Auch am Innen-Profil 4 sind an den Enden der Innenschenkel 8 Anschlagleisten 14 angeformt.

Auf der Länge des Brückensteges sind in Abständen Löcher 15 für Senkkopfschrauben vorgesehen. In diese sind Senkkopfschrauben 16 eingesetzt. Zwischen die Federstege 10 sind Klötze oder Leisten 17 eingerastet, die ein Muttergewinde 18 aufweisen, das dem Gewinde der Senkkopfschraube 16 entspricht.

Wenn das Innenprofil 4 gegen die Sandwichplatten 2 gesetzt ist, kann es gegebenenfalls durch Hohlniete 19 fixiert werden. Alsdann wird das Außenprofil 3 gegengesetzt. Zuvor können einzelne Klötze 17 oder Leisten mit Muttergewinden 18 in die Federstege 10 eingerastet werden. Durch Einsetzen der Senkkopfschrauben 16 und Festziehen werden Außenprofil 3 und Innenprofil 4 fest miteinander verspannt und bilden eine Einheit, die nicht nur hochbelastbar ist, sondern die auch die Ränder der Sandwichplatten 2 derart umfaßt, daß eine Kraftübertragung und eine dauerhaft hochbelastbare Abdichtung erzielt wird.

Die Außenschenkel 5 können, wie in Fig. 1 gezeigt ist mit flach-rechteckförmigen, in Richtung Sandwichplatte 2 offenen Ausnehmungen 20 versehen sein, in die Klebebänder oder hochbelastbarer pastöser Kleber eingebracht wird. Dieselbe Maßnahme ist auch an den Innenschenkel 8 möglich, welche mit flach-rechteckförmigen Ausnehmungen 21 ausgerüstet sein können.

Zwischen den Federstegen 10 und den Stirnflächen der Sandwichplatten 2 bleiben zwischen Innen- und Außenprofil 3 und 4 Hohlräume, die zweckmäßig und vorteilhaft genützt werden können. Sie eignen sich z.B. zum Unterbringen von Versorgungssträngen 22. Sie können aber auch schall- und wärmeislosierende Ausschäumungen 23 aufnehmen.

Die beschriebene Ausgestaltung erlaubt unterschiedliche Materialkombinationen. So können das Innenprofil 4 und das Außenprofil 3 einheitlich vorzugsweise als stranggepreßte Leichtmetallprofile ausgebildet sein. Um eine Kältebrücke zwischen beiden zu verhindern, genügt es, wenn z.B. der Klotz oder die Leiste 17, bzw. Mutter aus Kunststoff besteht oder die Senkkopfschraube 16 oder beide aus Kunststoff gefertigt sind. Eine andere Möglichkeit besteht darin, das Innenprofil 4 aus Kunststoff zu fertigen. Es kann auch glasfaserverstärkter Kunststoff sein. Das Außenprofil 3 kann aus Leichtmetall und die Senkkopfschraube 14 und der Klotz bzw. die Leiste 17 können dann aus beliebigem Material-Kunststoff oder Metall bestehen. Auch die umgekehrte Kombination ist denkbar. Es können auch beide, nämlich Innenprofil 4 und Außenprofil 3, aus Glasfaserkunststoff bestehen.

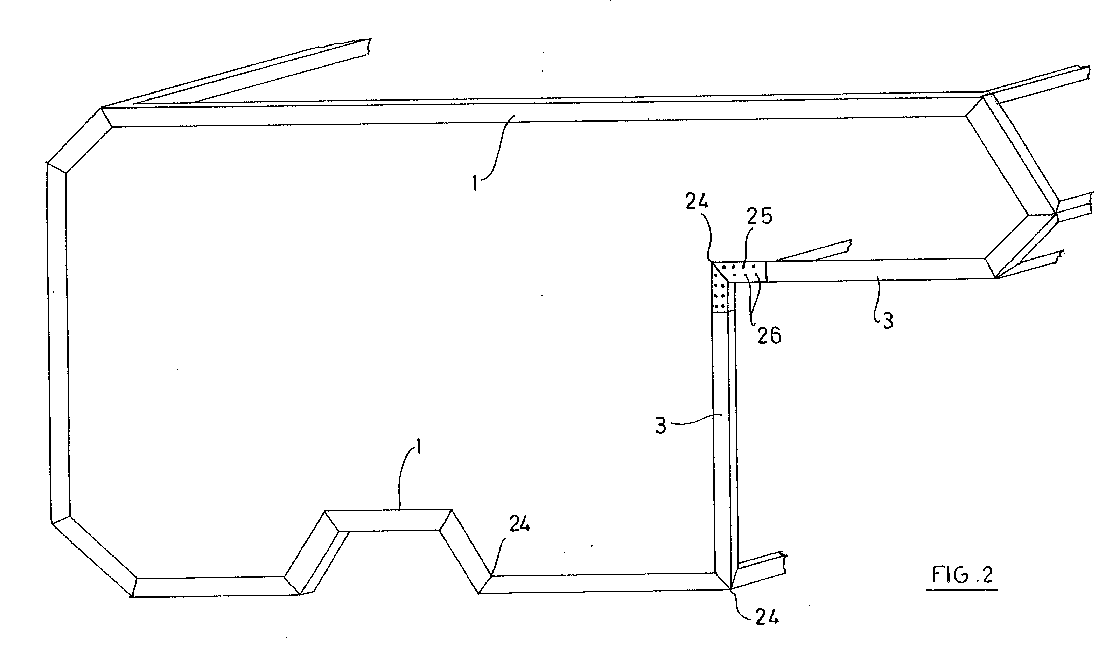

Der beschriebene Eckverbinder läßt sich gem. Fig. 2 auf sehr einfache Weise zu einem räumlich in sich geschlossenen Ringanker-Käfig zusammenfügen, der alle Sandwichplatten 2 -die in Fig. 2 weggelassen sind- von außen derart umfaßt, daß der gesamte Wohnwagenaufbau festigkeitstechnisch den Effekt eines einstückigen Hohlkörpers verwirklicht. Zu diesem Zweck sind die Außenprofile 3 an allen Winkeln, Stößen und Ecken 24 fest miteinander verbunden. Bei Metall kann dies durch Schmelzschweißung geschehen, bei Kunststoff durch Kunststoff-Kaltschweißung. Reicht die Festigkeit solcher Verbindungen nicht aus, oder werden extrem hohe Belastungen erwartet, so können die Eckstöße 24 durch muffenartig, ecküberbrückende Laschen 25 verstärkt und die Laschen 25 mit den Außenprofilen 3 zusätzlich durch Niete 26 verbunden werden. Es ergibt sich so bei jeder denkbaren Werkstoffart die Möglichkeit, höchstbelastbare Ringanker-Käfige zu bilden um eine extrem hohe Festigkeit des Wohnwagenaufbaues zu erzielen, der mit Hilfe des Eckverbinders 1 und den Sandwichplatten 2 geschaffen wird.

Alle in der Beschreibung und/oder den Zeichnungen dargestellten Einzel- und Kombinationsmerkmale werden als erfindungswesentlich angesehen.

Der Schutzumfang der Erfindung erstreckt sich nicht nur auf die Merkmale der einzelnen Ansprüche, sondern vor allem auf deren Kombination.

Es versteht sich von selbst, daß die Erfindung nicht auf das dargestellte und beschriebene Ausführungsbeispiel beschränkt sein soll. Vielmehr stellt dieses nur eine vorteilhafte Ausgestaltungsform des Erfindungsgedankens dar, der keinesfalls hierauf beschränkt sein soll.

## Ansprüche

1. Eckverbinder für Sandwichplatten von Wohnwagenaufbauten, bestehend aus Profil-Schenkel und -Stegen aus Leichtmetall oder GFK (Glasfaserkunststoff) wobei Außen- und Innenschenkel dicht und unverlierbar fest mit dem Rand der Außen- bzw. Innenseite von zwei rechtwinklig aneinander grenzenden Sandwichplatten verbunden sind und ein Rundsteg viertelkreisförmig von einem Außenschenkel zum anderen verläuft, und einen eckwinkelhalbierenden Diagonalsteg zur Ecke der Innenschenkel aufweist,
dadurch gekennzeichnet,
daß die Außenschenkel (5) mit dem Rundsteg (6) einerseits und die Innenschenkel (8) andererseits als ein selbständiges Außen- bzw. ein selbständiges Innenprofil (3, 4) ausgebildet sind,
daß die Ecke zwischen den Innenschenkeln (8) durch einen 45° zu beiden Innenschenkeln (8) verlaufenden Brückensteg (9) ersetzt ist,
daß auf der Länge des Brückensteges (9) in gleichen Abständen Widerlager für Verbindungsglieder (16) verteilt sind,
und daß die Verbindungsglieder form- und kraftschlüssig mit dem Diagonalsteg verbindbar sind.

2. Eckverbinder nach Anspruch 1,
dadurch gekennzeichnet,
daß der Diagonalsteg aus zwei abstandsparallelen, symmetrisch zur Eckwinkel-Halbierenden (11) in Richtung Innenprofil (4) verlaufenden am Ende mit gegeneinander gerichteten Widerhaken (12) versehenen Federstegen (10) besteht.

3. Eckverbinder nach Anspruch 1 und/oder 2,
dadurch gekennzeichnet,
daß die Widerlager als konische Löcher (15) für Verbindungsglieder in Form von Senkkopfschrauben (16) ausgebildet sind,
und daß zwischen den Widerhaken (12) der Federstege (10) Klötze oder Leisten (17) verdreh- und zugsicher eingerastet sind, die Muttergewinde (18) für die Senkkopfschrauben (16) aufweisen.

4. Eckverbinder nach einem oder mehreren der Ansprüche 1 bis 3, dadurch gekennzeichnet,
daß die Innen- und die Außenstege (4, 3) zur Sandwichplattenoberfläche offene, flach rechteckförmige Ausnehmungen (20, 21) aufweisen,
und daß in den Ausnehmungen mit den Sandwichplattenoberflächen dichtende Klebebänder und/oder an den Sandwichplattenoberflächen haftender hoch tragfähiger, pastöser Kleber von großer Tragfähigkeit aufgenommen ist.

5. Eckverbinder nach einem oder mehreren der Ansprüche 1 bis 4, dadurch gekennzeichnet,
daß am Außenprofil (3) zwischen den Außenschenkeln (5) und dem Rundsteg (6), am Innenprofil (4) zwischen den Innenschenkeln (8) und dem Brückensteg (9) in Richtung Sandwichplatte (2) vorspringende Anschlagleisten (7, 14) als Widerlager für die Stirnkanten der Sandwichplatten (2) angeformt sind.

6. Eckverbinder nach einem oder mehreren der Ansprüche 1 bis 5,dadurch gekennzeichnet,
daß die Innenschenkel (8) der Innenprofile (4) mit der Sandwichplatte (2) zusätzlich zur Klebverbindung vernietet sind.

7. Eckverbinder nach einem oder mehreren der Ansprüche 1 bis 6, dadurch gekennzeichnet,
daß das Innenprofil (4) und das Außenprofil (3) aus Leichtmetall, die Senkkopfschrauben (16) aus Kunststoff bestehen.

8. Eckverbinder nach einem oder mehreren der Ansprüche 1 bis 6, dadurch gekennzeichnet,
daß das Außenprofil (3) aus Leichtmetall, das Innenprofil (4) aus Kunststoff, ggfs. GFK (Glasfaserkunststoff) und die Senkschrauben (16) aus Metall bestehen.

9. Eckverbinder nach einem oder mehreren der Ansprüche 1 bis 6, dadurch gekennzeichnet,
daß das Außenprofil (3) aus GFK, das Innenprofil (4) aus Leichtmetall und die Senkkopfschrauben (16) aus Metall bestehen.

10. Eckverbinder nach einem oder mehreren der Ansprüche 1 bis 6, dadurch gekennzeichnet,
daß das Außenprofil (3) und das Innenprofil (4) aus GFK, die Senkkopfschrauben (16) aus Metall bestehen.

11. Eckverbinder nach einem oder mehreren der Ansprüche 1 bis 10, dadurch gekennzeichnet,
daß in den Hohlräumen zwischen Innen- und Außenprofil (4,3 ) sowie Sandwichplattenstirnflächen Versorgungsstränge (22) sowie schall- und wärmeisolierender und dichtender Schaum (23) aufgenommen ist.

12. Eckverbinder nach einem oder mehreren der Ansprüche 1 bis 11, dadurch gekennzeichnet,
daß alle Außenschenkel (5) der Außenprofile (3) eines Wohnwagenaufbaues an Gehrungs- und an Eckstößen (24) zu einem räumlichen, alle Sandwichplatten (2) von außen umschließenden, Ringanker-Käfig verbunden sind.

13. Eckverbinder nach Anspruch 13,
dadurch gekennzeichnet,
daß die Außenschenkel (5) bei Außenprofilen (3) aus Leichtmetall mittels Schmelzschweißung bei Außenprofilen aus GFK mittels Kunststoff-Kaltschweißung zum Ring-Käfiganker verbunden sind.

14. Eckverbinder nach Anspruch 12 und/oder 13, dadurch gekennzeichnet,
daß die Außenschenkel (5) an den Gehrungs- und Eckstößen (24) mittels stoßüberlappender Winkelund Eckmuffen (25) miteinander vernietet sind.

FIG.1

FIG. 2

EP 0 335 150 A2